# EUROPÄISCHE PATENTSCHRIFT

(11) **EP 3 428 523 B1**
(45) Veröffentlichungstag und Bekanntmachung des Hinweises auf die Patenterteilung: **29.04.2020**
(21) Anmeldenummer: 18180568.0
(22) Anmeldetag: 28.06.2018
(51) Int. Cl.: F21V 21/03, H02G 3/20, F21V 17/14, F21V 21/14, F21S 8/06, F21V 23/06

(54) **BEFESTIGUNGSVORRICHTUNG FÜR LEUCHTEN UND VERWENDUNG EINER SOLCHEN BEFESTIGUNGSVORRICHTUNG**
FIXING DEVICE FOR LIGHTS AND USE OF SAME
DISPOSITIF DE FIXATION POUR LUMINAIRES ET UTILISATION D'UN TEL DISPOSITIF DE FIXATION

(30) Priorität: 03.07.2017 DE 102017114769
(43) Veröffentlichungstag der Anmeldung: 16.01.2019
(73) Patentinhaber: Belz, Volker, 79206 Breisach (DE); Faller, Eberhard, 67435 Neustadt a.d. Weinstraße (DE)
(72) Erfinder: Belz, Volker, 79206 Breisach (DE)
(74) Vertreter: Mertzlufft-Paufler, Cornelius

(56) Entgegenhaltungen:
- DE-A1- 19 702 395
- GB-A- 2 400 987
- US-A1- 2002 197 910
- US-A1- 2006 108 137

## Beschreibung

Die Erfindung betrifft eine Befestigungsvorrichtung zur Befestigung einer Leuchte an einer Decke oder Wand mit einem an einer Decke oder Wand befestigbaren, stationären Grundträger und einem an einer Leuchte befestigbaren oder befestigten Leuchtenteil.

Die US 2002/0197910 A1 beschreibt eine Vorrichtung zum einfachen Installieren eines elektrischen Überkopfgeräts. Die Installation wird dabei- erleichtert, indem die Führungskanäle in einer Glocke einer elektrischen Vorrichtung ausgebildet und diese Kanäle mit den Führungen auf einer Platte ausgerichtet werden. Wenn die Führung und die Kanäle richtig ausgerichtet sind, wird eine elektrische Verbindung zwischen einem Stecker und einer Steckdose hergestellt. Der Stecker und Steckdose sind in einer Glocke und an einer Anschlusssteckdose montiert. Sobald die elektrische Verbindung hergestellt ist, wird die Glocke gedreht, um sie an den auf der Platte montierten Führungen zu befestigen.

US 2006/0108137 A1 beschreibt eine elektrische Schnellanschlusskastenanordnung zur Aufnahme und Halterung von Elektrogeräten mit einem ersten Trageelement, das an einem Gehäuse angebracht werden kann, wobei das erste Trageelement eine damit verbundene elektrische Steckdose aufweist, und einem zweiten Trageelement zum Halten eines Elektrogeräts mit einem drehbar damit verbundenen elektrischen Stecker, wobei der elektrische Stecker dazu ausgelegt ist, in der elektrischen Steckdose aufgenommen zu werden, um eine elektrische Verbindung zwischen dem ersten Trägerelement und dem zweiten Trägerelement herzustellen, wobei das zweite Trageelement mindestens einen lasttragenden Verbinder aufweist, wobei der lasttragende Verbinder so ausgelegt ist, dass er in dem ersten Trägerelement aufgenommen wird, um das zweite Trägerelement mit dem ersten Trägerelemente zu verbinden, wobei der lasttragende Verbinder von dem elektrischen Stecker beanstandet ist.

Aus der DE 197 02 395 A1 ist eine Vorrichtung zum Aufhängen von elektrisch betriebenen Lampen an Decken oder Wänden beschrieben. Die Vorrichtung umfasst eine erste Einheit, die an der Wand oder Decke befestigt ist. An der Lampe ist eine zweite Einheit befestigt. Die beiden Einheiten weisen miteinander korrespondierende Schnellverbindungsteile zum starren Befestigen der beiden Einheiten aneinander auf. Die erste Einheit weist weiterhin mit dem Zuführungskabel verbundene Buchsen und die zweite Einheit damit korrespondierende, mit dem Lampenkabel verbundene Steckkontakte auf.

GB 2 400 987 A betrifft eine Leuchte, umfassend eine Steckdose zum Anschließen an ein Stromnetz und eine Steckdose zum Anschließen an eine Leuchte. Ein Steckverbinder kann Steckkontakte mit Köpfen zum Hintergreifen von Schlitzen im Buchsenverbinder aufweisen, um dadurch eine Verbindung mit den entsprechenden Buchsenkontakten herzustellen. Die Köpfe können unterschiedliche Größen aufweisen, um eine richtig ausgerichtete Verbindung zu gewährleisten.

Ferner betrifft die Erfindung auch eine Verwendung einer erfindungsgemäßen Befestigungsvorrichtung.

Bisher ist es üblich, Leuchten an einer Decke mittels eines Hakens, der als Grundträger an einer Wand oder Decke befestigt wird, und mittels eines entsprechenden Gegenhakens oder einer Öse, die leuchtenseitig vorgesehen ist, an einer Decke oder Wand anzubringen. Sobald der Grundträger an der Wand oder Decke angebracht ist, werden wand- oder deckenseitig vorhandene elektrische Anschlussleitungen mit der Leuchte verbunden. Dazu werden in der Regel Lüsterklemmen verwendet. Ist die Leuchte mit der elektrischen Anschlussleitung verbunden, lässt sich die Leuchte mit ihrer Öse oder dem Gegenhaken an dem Grundträger befestigen.

Insbesondere bei Hängeleuchten kann der elektrische Anschluss der Leuchte an der Decke mit vergleichsweise viel Überkopfarbeit am Befestigungspunkt verbunden sein.

Aufgabe der Erfindung ist es daher, eine Befestigungsvorrichtung der eingangs genannten Art bereitzustellen, die die Montage und den Austausch von Leuchten an einer Decke oder Wand vereinfacht.

Zur Lösung dieser Aufgabe werden bei einer Befestigungsvorrichtung der eingangs genannten Art die Mittel und Merkmale des unabhängigen, auf eine Befestigungsvorrichtung gerichteten Anspruchs vorgeschlagen. Insbesondere wird somit eine Befestigungsvorrichtung der eingangs genannten Art vorgeschlagen, die eine Befestigungskupplung zur lösbaren Verbindung oder Befestigung des Leuchtenteils mit oder an dem Grundträger aufweist, wobei die Befestigungskupplung ein an dem Grundträger angeordnetes Kupplungselement und ein, insbesondere drehfest, mit dem Leuchtenteil verbundenes, zu dem Kupplungselement komplementär ausgebildetes Gegenkupplungselement umfasst, wobei das Kupplungselement in mit dem Gegenkupplungselement gekoppelter Gebrauchsstellung zusammen mit dem Leuchtenteil relativ zu dem Grundträger drehbar ist.

Das Leuchtenteil und das Gegenkupplungselement können hierbei als stofflich homogene, monolithische Einheit vorliegen und auf diese Weise drehfest miteinander verbunden sein. Das Leuchtenteil und das Gegenkupplungselement können also einstückig verbunden sein.

Mithilfe der Befestigungskupplung der Befestigungsvorrichtung lässt sich somit das zu dem Grundträger passend ausgebildete Leuchtenteil mit seinem Gegenkupplungselement an dem Grundträger festlegen. Die Montage der Leuchte kann hierbei mit geringerem Aufwand und komfortabel erfolgen.

Um die zu montierende Leuchte in der gewünschten Ausrichtung zu montieren, kann es bei den bisher bekannten Befestigungsvorrichtungen notwendig sein, die Leuchte nochmals von dem Grundträger abzunehmen und den Grundträger in geänderter Ausrichtung an der Wand oder Decke anzubringen. Sämtliche Arbeiten zur Montage und zum Anschluss der Leuchte an der Decke oder Wand müssen dann erneut durchgeführt werden. Ist ein Austausch einer montierten Leuchte gewünscht, ist dies ebenfalls mit einem gewissen Montageaufwand verbunden.

Um diese Probleme zu vermeiden, kann es daher vorteilhaft sein, wenn das Kupplungselement bei geschlossener Befestigungskupplung in mit dem Gegenkupplungselement gekoppelter Gebrauchsstellung zusammen mit dem Leuchtenteil relativ zu dem Grundträger drehbar ist, wobei das Gegenkupplungselement dann vorzugsweise drehfest mit dem Leuchtenteil verbunden sein kann.

So ist es dann mit der Befestigungsvorrichtung möglich, eine bereits aufgehängte oder montierte Leuchte durch die Drehbarkeit des Kupplungselements relativ zu dem Grundträger selbst in montierter Gebrauchsstellung noch auszurichten. Dies ist vor allem bei langgestreckten Hängeleuchten vorteilhaft. Bei solchen langgestreckten Hängeleuchten werden bereits kleinere Winkelabweichungen der montierten Leuchte von ihrer gewünschten Soll-Ausrichtung leicht bemerkt und als störend empfunden.

Die Befestigungsvorrichtung schafft hier insofern Abhilfe, als dass mithilfe der Befestigungsvorrichtung eine Feinjustage und/oder eine Neuausrichtung einer derartig befestigten Leuchte möglich ist, ohne den Grundträger oder die Leuchte zu demontieren.

Besonders vorteilhaft kann es sein, wenn die Befestigungskupplung werkzeugfrei schließbar und lösbar ist. Auf diese Weise kann die Befestigungskupplung der Befestigungsvorrichtung für einen Austausch einer Leuchte beispielsweise rein manuell und ohne Einsatz von Werkzeug gelöst werden. Dies kann die Flexibilität der Befestigungsvorrichtung und ihre Handhabung erhöhen.

Um eine Drehbarkeit des Kupplungselements relativ zu dem Grundträger zu begünstigen, kann es insbesondere bei solchen Befestigungsvorrichtungen, die zur hängenden Montage von Leuchten vorgesehen sind, vorteilhaft sein, wenn das Kupplungselement relativ zu dem Grundträger axial verschieblich ist. Durch ein axiales Verschieben des Kupplungselements relativ zu dem Grundträger kann eine reibschlüssige Verbindung zwischen dem Kupplungselement und dem Grundträger aufgehoben werden, um Ausrichtung einer montierten Leuchte durch eine Verdrehung des Leuchtenteils zusammen mit dem Kupplungselement auch bei geschlossener Befestigungskupplung vorzunehmen.

Um ein Lösen oder Öffnen der Befestigungskupplung ohne Werkzeug zu begünstigen, kann es ferner vorteilhaft sein, wenn das Kupplungselement, insbesondere an seiner wand- oder deckenseitigen Oberseite, eine rutschhemmende Beschichtung aufweist und/oder aus einem rutschhemmenden Material besteht. Auf diese Weise ist es möglich, das Kupplungselement beim Lösen oder Öffnen der Befestigungskupplung durch einen Druck auf das Leuchtenteil gegen die Wand oder Decke zu drücken und die für das Lösen der Befestigungskupplung erforderliche Relativbewegung zwischen dem Kupplungselement und dem Gegenkupplungselement durch eine entsprechende Löse- oder Öffnungsbewegung von dem Kupplungselement zu trennen. Hierbei kann das Kupplungselement aufgrund seiner rutschhemmenden Beschichtung oder aufgrund des rutschhemmenden Materials an der Wand oder Decke zurückgehalten werden, sodass sich die Befestigungskupplung leichter lösen lässt.

Die Befestigungsvorrichtung kann zudem eine elektrische Kontaktierungsvorrichtung zur Herstellung einer elektrischen Verbindung zwischen einer mit dem Leuchtenteil verbundenen Leuchte und einem elektrischen Anschluss aufweisen. Hierbei kann vorgesehen sein, dass die elektrische Kontaktierungsvorrichtung an dem Grundträger ein Anschlussmittel, insbesondere eine Lüsterklemme, und mit diesem elektrisch verbundene elektrische Kontaktelemente und an dem Leuchtenteil dazu passende elektrische Gegenkontaktelemente und ein elektrisch mit diesen verbundenes Leuchtenanschlussmittel, insbesondere eine Lüsterklemme, umfasst. Der Grundträger Anschlussmittel, insbesondere eine Lüsterklemme, aufweist, mit der er an den elektrischen Anschluss in der Decke oder Wand anschließbar ist.

Somit kann zunächst der Grundträger mit seinem Anschlussmittel mit einem deckenseitigen oder wandseitigen elektrischen Anschluss verbunden und an der Decke oder Wand montiert werden. Anschließend kann eine Leuchte über das Leuchtenanschlussmittel elektrisch mit dem Leuchtenteil verbunden werden. Dies kann abseits einer Befestigungsstelle der Leuchte an der Wand oder Decke erfolgen. Das so vorbereitete Leuchtenteil lässt sich schließlich elektrisch mit dem Grundträger verbinden und durch die Befestigungskupplung einfach an dem bereits installierten Grundträger festlegen, um die Leuchte zu montieren.

Um die Herstellung der elektrischen Verbindung zwischen dem Leuchtenteil und dem elektrischen Anschluss, beispielsweise in Form von in einer Decke oder einer Wand befindlichen elektrischen Leitungen, verbundenen Grundträger noch weiter zu vereinfachen, kann die elektrische Kontaktierungsvorrichtung derart angeordnet und/oder ausgebildet sein, dass eine elektrische Verbindung zwischen einem elektrischen Anschluss und dem Leuchtenteil durch Schließen der Befestigungskupplung herstellbar ist.

Auf diese Weise ist es möglich, eine elektrische Kontaktierung ohne eine gesonderte Verkabelungsarbeit zwischen dem Leuchtenteil und dem Grundträger an der Decke oder Wand vorzunehmen. Vielmehr reicht es aus, das Leuchtenteil in der zuvor beschriebenen Art und Weise mithilfe der Befestigungskupplung an dem Grundträger festzulegen. Durch die entsprechende Anordnung oder Ausbildung der Kontaktierungsvorrichtung wird die elektrische Verbindung dadurch automatisch erzeugt beziehungsweise geschlossen.

Besonders vorteilhaft kann es sein, wenn die elektrischen Kontaktelemente an dem Grundträger und die elektrischen Gegenkontaktelemente an dem Leuchtenteil dabei derart angeordnet und/oder ausgebildet sind, dass eine elektrische Verbindung zwischen einem elektrischen Anschluss und dem Leuchtenteil durch Schließen der Befestigungskupplung herstellbar ist.

An dieser Stelle sei darauf hingewiesen, dass es hierbei nur eine vergleichsweise einfache Verkabelung des Grundträgers an aus der Decke oder Wand ragende Anschlussleitungen notwendig ist. Wie zuvor ausgeführt, kann es vorteilhaft sein, wenn die Kontaktierungsvorrichtung auf Seiten des Grundträgers beispielsweise ein entsprechendes Anschlussmittel zum Beispiel in Form einer Lüsterklemme aufweist. Auf diese Weise kann der Grundträger vor der Montage an der Decke oder Wand mit vorhandenen Anschlussleitungen elektrisch verbunden werden. Die insbesondere bei einem Wechsel von Leuchten notwendige Überkopfverkabelung der an der Leuchte vorgesehenen Anschlussleitungen oder Kabel an einer Wand hängenden Lüsterklemme entfällt durch die zuvor beschriebene Kontaktierungsvorrichtung der erfindungsgemäßen Befestigungsvorrichtung.

Insbesondere bei einem solchen Leuchtenteil, das separat von einer Leuchte vorgesehen sein kann, kann die hier möglicherweise notwendige Verkabelung zwischen der Leuchte und den an dem Leuchtenteil vorhandenen Gegenkontaktelementen abseits des eigentlichen Befestigungspunktes der Leuchte in komfortablerer Haltung erfolgen. Überkopfarbeit ist hierbei nicht notwendig.

Bei solchen Leuchtenteilen, die zum Beispiel nicht zerstörungsfrei lösbar an einer Leuchte, also als Teil der Leuchte ausgebildet sind, kann die leuchtenseitige Verkabelungsarbeit an dem Leuchtenteil für den Endanwender vollständig entfallen.

Bei einer besonders bevorzugten Ausführungsform der Befestigungsvorrichtung kann die elektrische Kontaktierungsvorrichtung zumindest zwei oder drei oder vier oder mehr, vorzugsweise federgelagerte Kontaktbolzen als Kontaktelemente an dem Grundträger aufweisen. An dem Leuchtenteil kann die Befestigungsvorrichtung dann in Anzahl und Anordnung entsprechende Schleifringe oder Schleifringbleche und/oder zumindest eine zentrische Kontaktbuchse und/oder einen zentrischen Gegenpin als Gegenkontaktelemente aufweisen. Auf diese Weise wird eine elektrische Kontaktierungsvorrichtung geschaffen, die eine elektrische Kontaktierung zwischen dem Grundträger und dem Leuchtenteil der Befestigungsvorrichtung auch bei unterschiedlichen Drehstellungen des Leuchtenteils zu dem Grundträger erlaubt. Dies erfolgt insbesondere über die vorzugsweise konzentrischen Schleifringe oder Schleifringbleche, die die vorzugsweise federnd gelagerten Kontaktbolzen bei jeglicher Drehstellung des Leuchtenteils relativ zu dem Grundträger zuverlässig kontaktieren können. Der Grundträger oder das Leuchtenteil können Aufnahmeöffnungen für die Kontaktbolzen aufweisen, in denen die Kontaktbolzen in Gebrauchsstellung positioniert oder angeordnet sind.

Vorteilhaft kann es sein, wenn die Kontaktbolzen, insbesondere an einem Ende, eine Querschnittserweiterung, beispielsweise einen Rand oder einer Krempe aufweisen, deren Durchmesser größer als ein Durchmesser von Aufnahmeöffnungen für die Kontaktbolzen im Grundträger oder Leuchtenteil sind. Auf diese Weise wird verhindert, dass der mit einer derartigen Querschnittserweiterung versehene Kontaktbolzen durch die Aufnahmeöffnung herausfällt und verloren geht, beispielsweise falls ein Federblech oder eine Federzunge brechen sollte, über das/die er mit dem Grundträger oder mit dem Leuchtenteil verbunden sein kann.

Grundsätzlich ist auch eine umgekehrte Anordnung der Kontaktbolzen beziehungsweise der Kontaktbuchse, des zentrischen Gegenpins und/oder der Schleifringe oder Schleifringbleche möglich. So kann bei einer anderen Ausführungsform der elektrischen Kontaktierungsvorrichtung vorgesehen sein, dass zumindest zwei oder drei oder vier oder mehr, vorzugsweise federnd gelagerte, Kontaktbolzen als Gegenkontaktelemente an dem Leuchtenteil und in Anzahl und Anordnung entsprechende Schleifringe oder Schleifringbleche und/oder zumindest eine zentrisch angeordnete Kontaktbuchse und/oder ein zentrisch angeordneter Gegenpin als Kontaktelemente an dem Grundträger vorgesehen sind.

Bei einer vor allem aus Sicherheitsgründen besonders zu bevorzugenden Ausführungsform der Befestigungsvorrichtung kann vorgesehen sein, dass der Grundträger oder das Leuchtenteil Ringnuten zur Aufnahme von Schleifringen oder Schleifringblechen und/oder eine zentrische Bolzenaufnahme für einen Kontaktbolzen aufweisen. Innerhalb der Ringnuten und/oder der Bolzenaufnahme befinden sich dann jeweils freie Kontaktenden der Kontaktelemente, insbesondere Kontaktbolzen, die dann mit einem Abstand zu einer Nutöffnung der Ringnuten und/oder einer Öffnung der Bolzenaufnahme angeordnet sind. Diese Variante der Befestigungsvorrichtung ist vor allem dann sinnvoll, wenn ein direkter Kontakt eines Benutzers mit den stromführenden Kontaktbolzen vermieden werden soll. So ist es besonders vorteilhaft, die Ringnuten und/oder die Bolzenaufnahme und die Kontaktelemente oder Kontaktbolzen an dem Grundträger vorzusehen, der mit den stromführenden Kabeln der Decke und/oder Wand verbunden ist.

Vorteilhafterweise kann die Befestigungskupplung als Bajonettkupplung ausgebildet sein. Eine derartige Bajonettkupplung lässt sich durch eine Steck-Drehbewegung des Gegenkupplungselements relativ zu dem Kupplungselement schließen. Insbesondere bei der Verwendung einer Kontaktierungsvorrichtung, wie sie zuvor beschrieben wurde, ist eine derartige Bajonettkupplung als Befestigungskupplung vorteilhaft, da so die mechanische Befestigungsbewegung zum Schließen der Befestigungskupplung gleichzeitig auch zum Anschließen der Leuchte an die deckenseitig oder wandseitig vorhandenen Anschlussleitungen vorgenommen werden kann.

Um ein unbeabsichtigtes Lösen der Befestigungskupplung und damit ein unbeabsichtigtes Lösen der Leuchte von der Wand oder Decke zu verhindern, kann es vorteilhaft sein, wenn die Befestigungsvorrichtung zumindest ein zwischen dem Kupplungselement und dem Gegenkupplungselement wirksames Sicherungselement aufweist.

Das Kupplungselement kann als Drehring mit zumindest zwei, vorzugsweise jedoch drei, insbesondere gleichmäßig um einen Mittelpunkt des Drehrings verteilt angeordneten Haltevorsprüngen sein. Das Gegenkupplungselement kann, korrespondierend zu dem Kupplungselement, dann zumindest zwei oder mehr zu den Haltevorsprüngen passende Halteaufnahmen aufweisen. Das Kupplungselement kann zum Schließen der Befestigungskupplung mit seinen Haltevorsprüngen in die passenden Halteaufnahmen an dem Gegenkupplungselement eingesetzt werden. Es sei erwähnt, dass natürlich auch eine umgekehrte Anordnung von Haltevorsprüngen und Halteaufnahmen möglich sein kann. So ist es auch denkbar, dass das Gegenkupplungselement als Ring mit zumindest zwei Haltevorsprüngen ausgebildet ist, die vorzugsweise gleichmäßig verteilt um einen Mittelpunkt oder eine Längsmittelachse des Gegenkupplungselements angeordnet sind. Entsprechend dazu kann das Kupplungselement insbesondere als Drehring ausgebildet sein und zumindest zwei, oder in Anzahl und Anordnung entsprechende Halteaufnahmen aufweisen, die zu den Haltevorsprüngen des Gegenkupplungselements passend ausgebildet sind.

Innerhalb der Halteaufnahmen, sei es dass sie an dem Kupplungselement oder an dem Gegenkupplungselement ausgebildet sind, können als Sicherungselemente jeweils ein, insbesondere radial orientierter, Sicherheitsvorsprung vorgesehen sein.

Eine lichte Höhe eines jeden Sicherungsvorsprungs kann zumindest einem Viertel einer lichten Höhe der Haltevorsprünge, insbesondere des Kupplungselements, entsprechen. Auf diese Weise wird ein unbeabsichtigtes Lösen der Befestigungskupplung effektiv vermieden. Um die Befestigungskupplung zu lösen, muss eine axiale Relativbewegung zwischen dem Kupplungselement und dem Gegenkupplungselement zur Überwindung der lichten Höhe der Haltevorsprünge vorgenommen werden. Erst wenn die lichte Höhe der Haltevorsprünge durch eine entsprechende axiale Bewegung überwunden wurde, lässt sich die Befestigungskupplung, insbesondere wenn sie als Bajonettkupplung ausgebildet ist, durch eine entsprechende Bewegung oder Drehbewegung lösen.

Um das Lösen der Befestigungskupplung auch bei vorhandenen Sicherungselementen, insbesondere Sicherungsvorsprüngen, zu gewährleisten, kann es vorteilhaft sein, wenn ein Abstand der Sicherungselemente zu einem Grund ihrer Halteaufnahmen größer als eine lichte Höhe der Haltevorsprünge selbst ist. Auf diese Weise kann sichergestellt werden, dass die Haltevorsprünge komfortabel durch die so entstandene Lücke zwischen dem jeweiligen Sicherungselement und dem Grund der Halteaufnahme, in der das Sicherungselement ausgebildet oder angeordnet ist, zur Verfügung steht, um den jeweiligen Haltevorsprung aus der Halteaufnahme zu entfernen und die Befestigungskupplung zu lösen.

Dabei kann dieser Abstand beispielsweise eineinviertel, eineindrittel, eineinhalb mal oder doppelt oder mehrfach so groß wie die lichte Höhe der Haltevorsprünge sein.

Eine lichte Höhe der Sicherungsvorsprünge kann ferner kleiner als ein zwischen dem in Gebrauchsstellung befindlichen Gegenkupplungselement und einer wand- oder deckenseitigen Oberseite des Kupplungselements gemessener Abstand sein. Auf diese Weise kann sichergestellt werden, dass der axiale Verschiebeweg des Gegenkupplungselements relativ zu dem Kupplungselement bis zum Anschlag an die Decke oder Wand ausreicht, um das Sicherungselement, insbesondere die Sicherungsvorsprünge, aus einem Eingriff mit den Haltevorsprüngen des Kupplungselements zu bringen.

Ferner ist es möglich, dass das Kupplungselement bei geschlossener Befestigungskupplung zu einer wand- oder deckenseitigen Grundseite des Grundträgers beabstandet ist. Dies ist sinnvoll, um eine relative Drehbarkeit des Kupplungselements relativ zu dem Grundträger zu ermöglichen. Insbesondere dann, wenn das Kupplungselement an seiner wand- oder deckenseitigen Oberseite mit einer rutschhemmenden Beschichtung versehen oder aus einem rutschhemmenden Material hergestellt ist, ist dieser Abstand sinnvoll, um eine Verdrehbarkeit des über die Befestigungskupplung mit dem Grundträger verbundenen Leuchtenteils relativ zu dem Grundträger zu erlauben und nicht zu behindern.

Bei einer Variante der Befestigungsvorrichtung kann vorgesehen sein, dass das Leuchtenteil, insbesondere an seiner dem Grundträger abgewandten Vorderseite, ein Befestigungsmittel für eine Leuchte aufweist. Das Befestigungsmittel kann beispielsweise ein Aufhängehaken oder eine Öse sein, in die eine Leuchte mit einem entsprechenden Gegenbefestigungsmittel eingehängt werden kann.

Eine andere Ausführungsform der Befestigungsvorrichtung sieht vor, dass das Leuchtenteil integraler Teil einer Leuchte ist.

Auf diese Weise bilden somit das Leuchtenteil der Befestigungsvorrichtung und die Leuchte eine Einheit. Somit kann bei einer standardisierten Gestaltung von Grundträger und Leuchtenteil ein besonders einfacher Austausch von derartig ausgestatteten Leuchten möglich sein. Zudem ist auch eine Baureihe von Leuchten denkbar, die zumindest hinsichtlich der Gestaltung ihrer Leuchtenteile übereinstimmen und so einfach untereinander austauschbar sind und alle an einen bereits montierten Grundträger passen.

Zudem ist es möglich, dass ein Leuchtmittel, bevorzugt über eine Leuchtmittelfassung einer Leuchte, zumindest indirekt mit dem Leuchtenteil lösbar verbunden ist. Als Leuchtmittel können hierbei unterschiedlichste Lampen, zum Beispiel Halogenstrahler oder LED-Lampen verwendet werden. Bei einem Verschleiß des Leuchtmittels lässt sich dieses von dem Leuchtenteil lösen und durch ein neues ersetzen.

Die eingangs genannte Aufgabe wird auch durch eine Verwendung einer erfindungsgemäßen Befestigungsvorrichtung gemäß Anspruch 16 gelöst. Hierbei wird zunächst das Grundteil der Befestigungsvorrichtung zusammen mit dem Kupplungselement an einer Decke oder Wand montiert. Anschließend wird ein mit einer Leuchte verbundenes Leuchtenteil durch Schließen der Kupplungsvorrichtung an dem Grundteil befestigt. Somit ist auf besonders einfache und unkomplizierte Weise die Montage der Leuchte an der Wand oder Decke abgeschlossen.

Besonders vorteilhaft kann es sein, wenn bei der Verwendung vorgesehen ist, dass eine elektrische Verbindung zwischen dem Grundträger und dem Leuchtenteil und einer damit verbundenen Leuchte über die elektrische Kontaktierungsvorrichtung der Befestigungsvorrichtung beim Schließen der Befestigungskupplung hergestellt wird. Auf diese Weise werden also eine separate Verkabelung und eine oftmals damit verbundene Überkopfarbeit zum elektrischen Anschluss der Leuchte bei der Montage vermieden.

Lediglich bei einer ersten Montage des Grundträgers an einer Decke oder Wand ist es einmalig notwendig, den Grundträger und seine Kontaktelemente mit entsprechenden elektrischen Leitungen, die an der Wand oder Decke vorhanden sind, zu verbinden.

Es sei erwähnt, dass der Grundträger der Befestigungsvorrichtung in einer sogenannten Aufputz-Variante vorgesehen sein kann. Es ist aber auch möglich, den Grundträger in eine Decke oder Wand einzulassen, also als Unterputz-Variante vorzusehen.

Nachfolgend ist ein Ausführungsbeispiel der Erfindung anhand der Zeichnungen näher beschrieben. Es zeigen in teilweise stark schematisierter Darstellung:

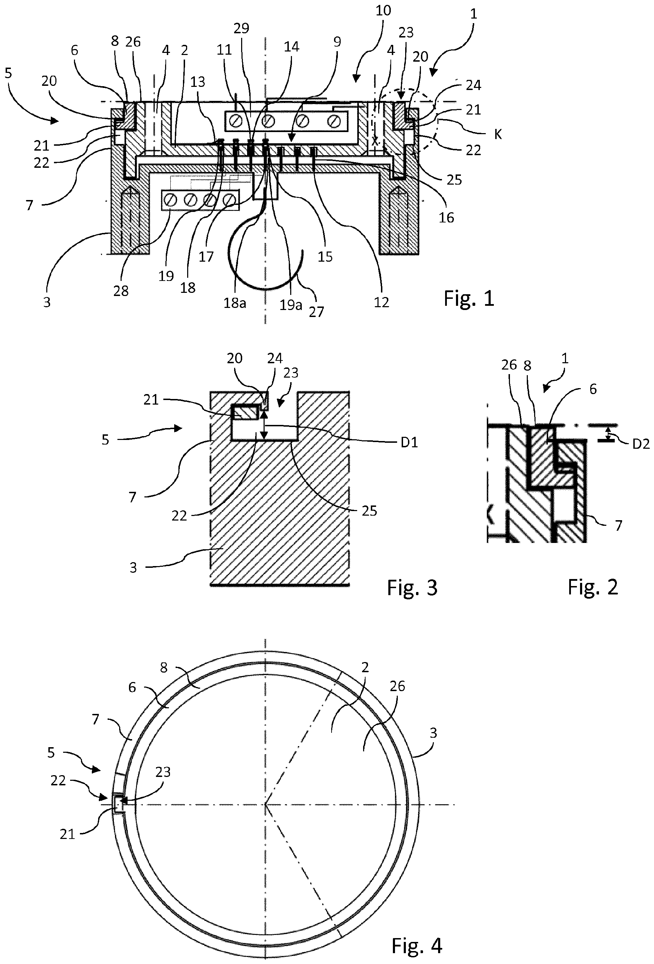

- Fig. 1: eine geschnittene Seitenansicht einer Befestigungsvorrichtung mit einem über eine Befestigungskupplung mit einem Grundträger verbundenen Leuchtenteil, wobei gut zu erkennen ist, dass bei geschlossener Befestigungskupplung über eine Kontaktierungsvorrichtung der Befestigungsvorrichtung auch eine elektrische Kontaktierung des Leuchtenteils mit dem Grundträger hergestellt ist,
- Fig. 2: die in Figur 1 mit dem Kreis K markierte Einzelheit in vergrößerter Darstellung,
- Fig. 3: eine durch das Kupplungselement und das Gegenkupplungselement der Befestigungsvorrichtung geschnittene Seitenansicht der in Fig. 1 dargestellten Befestigungsvorrichtung zur Veranschaulichung der Lage eines Haltevorsprungs des Kupplungselements in einer Halteaufnahme des Gegenkupplungselements,
- Fig. 4: eine stark schematisierte Draufsicht auf die in den Fig. 1 bis 3 dargestellte Befestigungsvorrichtung, wobei hier gut eine Einführöffnung in eine Halteaufnahme des Gegenkupplungselements zu erkennen ist,

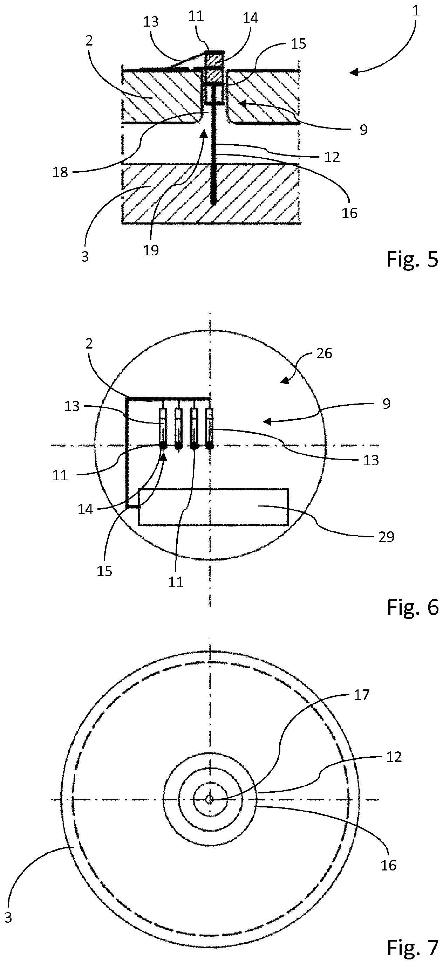

- Fig. 5: eine geschnittene Seitenansicht einer vergrößerten Einzelheit der in den Fig. 1 bis 4 dargestellten Befestigungsvorrichtung, wobei hier einerseits ein Teil eines Schleifringblechs als Gegenkontakt an dem Leuchtenteil sowie an dem Grundträger ein über eine Federzunge oder ein Federblech federnd gelagerter Kontaktbolzen als Kontaktelement der elektrischen Kontaktierungsvorrichtung zu erkennen sind,
- Fig. 6: eine stark schematisierte Draufsicht auf den in den vorherigen Figuren dargestellten Grundträger, wobei insgesamt vier Federzungen der elektrischen Kontaktierungsvorrichtung der Befestigungsvorrichtung zu erkennen sind, über die insgesamt drei äußere und ein zentrischer Kontaktbolzen der Kontaktierungsvorrichtung federnd an dem Grundträger gelagert sind, sowie
- Fig. 7: eine Draufsicht auf das in den vorherigen Figuren dargestellte Leuchtenteil, mit seinen insgesamt drei konzentrischen Schleifringblechen und einem zentrisch angeordneten Gegenkontakt zur Kontaktierung der insgesamt vier in Fig. 5 dargestellten, federnd gelagerten Kontaktbolzen, über die eine elektrische Verbindung zwischen einer mit dem Leuchtenteil verbundenen Leuchte und dem an ein Stromnetz angeschlossenen Grundträger hergestellt werden kann.

Die Fig. 1 bis 7 zeigen eine im Ganzen mit 1 bezeichnete Befestigungsvorrichtung für Leuchten an einer Decke oder Wand mit einem an einer Decke oder Wand befestigbaren, in seiner Gebrauchsstellung stationären Grundträger 2 und einem an einer Leuchte befestigbaren oder befestigten Leuchtenteil 3.

Der an einer Decke oder Wand vorgesehene stationäre Grundträger 2 wird vor einer Montage einer Leuchte an einer Wand oder Decke an der Wand oder Decke befestigt. Dazu weist der Grundträger 2 mehrere Durchstecköffnungen 4 auf, durch die Schrauben zum Befestigen des Grundträgers 2 an der Wand oder Decke durchgesteckt werden können.

Zur lösbaren Befestigung des Leuchtenteils 3 an dem Grundträger 2 und damit auch zur lösbaren Befestigung einer Leuchte an einer Wand oder Decke weist die Befestigungsvorrichtung 1 zudem eine Befestigungskupplung 5 auf. Die Befestigungskupplung 5 umfasst ein an dem Grundträger 2 in Gebrauchsstellung angeordnetes und relativ zu diesem drehbares Kupplungselement 6 sowie ein drehfest mit dem Leuchtenteil 3 verbundenes, zu dem Kupplungselement 6 komplementär ausgebildetes Gegenkupplungselement 7.

Eine wesentliche Besonderheit der in den Fig. 1 bis 7 dargestellten Befestigungsvorrichtung 1 besteht nun darin, dass das Kupplungselement 6 in mit dem Gegenkupplungselement 7 gekoppelter Gebrauchsstellung zusammen mit dem Leuchtenteil 3 relativ zu dem Grundträger 2 der Befestigungsvorrichtung 1 drehbar ist.

Auf diese Weise lässt sich eine mittels der Befestigungsvorrichtung 1 an einer Wand oder Decke befestigte Leuchte selbst bei geschlossener Befestigungskupplung 5 aufgrund der Drehbarkeit des Kupplungselements 6, des Gegenkupplungselements 7 und des Leuchtenteils 3 relativ zu dem Grundträger 2 nachträglich ausrichten. Dies ist vor allem bei langestreckten Leuchten, insbesondere Hängeleuchten, bei denen Abweichungen von einer gewünschten Soll-Ausrichtung sofort auffallen und als störend empfunden werden.

Die Befestigungskupplung 5 kann werkzeugfrei geschlossen und auch wieder gelöst werden. Dies vereinfacht die Handhabung der Befestigungsvorrichtung bei einer Montage oder bei einem Wechsel einer Leuchte erheblich.

Das Kupplungselement 6 ist relativ zu dem Grundträger 2 axial verschieblich. Dies begünstigt ein Öffnen oder Lösen der Befestigungskupplung 5. Dadurch ist es nämlich möglich, das Kupplungselement 6 durch eine entsprechende Bewegung soweit axial relativ zu dem Grundträger 2 zu verschieben, bis es an eine Wand oder Decke anstößt. Durch den Reibkontakt zu der Wand oder Decke kann eine Lösekraft zum Lösen der Befestigungskupplung 5 auf das Gegenkupplungselement 7 und das Kupplungselement 6 übertragen werden.

Um das Lösen der Befestigungskupplung 5 zu erleichtern, weist das Kupplungselement 6 an seiner wand- oder deckenseitigen Oberseite 8 eine rutschhemmende Beschichtung auf oder besteht aus einem rutschhemmenden Material. Auf diese Weise kann die beim Andrücken des Kupplungselements 6 an die Wand oder Decke erzeugte Reib- oder Rückhaltekraft leicht erhöht und die Befestigungskupplung 5 noch einfacher und zuverlässiger gelöst werden.

Die Befestigungsvorrichtung 1 weist zudem eine elektrische Kontaktierungsvorrichtung 9 auf. Die elektrische Kontaktierungsvorrichtung 9 dient dazu, eine elektrische Verbindung zwischen einer mit dem Leuchtenteil 3 verbundenen Leuchte und einem elektrischen Anschluss 10, der in der Regel in einer Wand oder Decke zum Anschluss von Leuchten bereitsteht, herzustellen.

Die elektrische Kontaktierungsvorrichtung 9 umfasst dabei elektrische Kontaktelemente 11 an dem Grundträger 2 und elektrische Gegenkontaktelemente 12 an dem Leuchtenteil 3.

Die elektrische Kontaktierungsvorrichtung 9 und ihre elektrischen Kontaktelemente 11 sowie ihre elektrischen Gegenkontaktelemente 12 an dem Leuchtenteil 3 sind derart angeordnet und ausgebildet, dass eine elektrische Verbindung zwischen dem elektrischen Anschluss 10 und dem Leuchtenteil 3 und damit auch zwischen dem elektrischen Anschluss 10 und der mit dem Leuchtenteil 3 elektrisch verbundenen Leuchte durch Schließen der Befestigungskupplung 5 automatisch hergestellt wird. So ist bei der Verbindung des Leuchtenteils 3 mit dem Grundträger 2 der Befestigungsvorrichtung 1 eine separate Verkabelung, die in der Regel über Kopf zu erfolgen hat, wenn eine Leuchte an einer Decke befestigt werden soll, nicht notwendig. Mit der Montage der Leuchte an der Wand oder Decke wird automatisch auch der elektrische Kontakt der Leuchte zu dem Anschluss 10 in der Wand oder Decke hergestellt.

An dieser Stelle sei erwähnt, dass bei einer Erstmontage des Grundträgers 2 an einer Wand oder Decke dieser zum Anschluss seiner Kontaktelemente 11 an das Stromnetz natürlich mit dem elektrischen Anschluss 10 der Wand oder Decke verbunden werden muss. Diese Arbeit muss jedoch nur einmalig erfolgen. Jede Leuchte, die mit einem passenden Leuchtenteil 3 ausgestattet ist, lässt sich dann durch ein vergleichsweise einfaches Schließen der Befestigungskupplung 5 nicht nur mit dem Grundträger 2 mechanisch verbinden, sondern auch elektrisch an den elektrischen Anschluss 10 anschließen.

Die elektrische Kontaktierungsvorrichtung 9 weist als Kontaktelemente 11 an dem Grundträger 2 insgesamt vier über jeweils eine Federzunge oder ein Federblech 13 federnd gelagerte Kontaktbolzen 14 auf. Wie insbesondere die Fig. 1, 5 und 6 verdeutlichen, ist jeder der Kontaktbolzen 14 in einer den Grundträger 2 durchsetzenden Aufnahmeöffnung 15 positioniert.

An dem Leuchtenteil 3 sind in Anzahl und Anordnung entsprechende konzentrische Schleifringbleche 16 sowie ein zentrischer Gegenkontakt 17 als Gegenkontaktelemente 12 der Kontaktierungsvorrichtung 9 vorgesehen.

Der Grundträger 2 weist insgesamt drei konzentrisch zu einander angeordnete Ringnuten 18 und eine zentrische Bolzenaufnahme 18a auf. Die Ringnuten 18 dienen der Aufnahme der Schleifringbleche 16 des Leuchtenteils 3. Innerhalb der Ringnuten 18 und der zentrischen Bolzenaufnahme 18a sind freie Kontaktenden der Kontaktbolzen 14 mit einem Abstand zu einer Nutöffnung 19 der Ringnuten 18 bzw. zu einer Öffnung 19a der Bolzenaufnahme 18a angeordnet.

Die Kontaktbolzen 14 werden von einer Oberseite des Grundträgers 2 durch die bereits zuvor erwähnten Aufnahmeöffnungen 15 rückseitig in die Ringnuten 18 bzw. in die Bolzenaufnahme 18a eingeschoben. Die Abmessungen der Kontaktbolzen 14 sind dabei derart auf die Tiefe der Ringnuten 18 bzw. der Bolzenaufnahme 18a abgestimmt, dass die Kontaktbolzen 14 mit ihren freien Kontaktenden nicht aus den Ringnuten 18 bzw. aus der Bolzenaufnahme 18a herausragen.

Durch die federnd gelagerten Kontaktbolzen 14, wobei diese Federung der Kontaktbolzen 14 mithilfe der Federbleche 13, über die die Kontaktbolzen 14 mit dem Grundträger 2 verbunden sind, hergestellt wird, kann eine besonders zuverlässige elektrische Kontaktierung oder elektrische Verbindung zwischen dem Leuchtenteil 3 und dem Grundträger 2 mithilfe der Kontaktierungsvorrichtung 9 hergestellt werden.

Bei einer in den Figuren nicht dargestellten Ausführungsform der Befestigungsvorrichtung 1 ist vorgesehen, dass die Kontaktbolzen 14 an einem rückseitigen Ende eine Querschnittserweiterung, beispielsweise einen Rand oder eine Krempe aufweisen, deren Durchmesser größer als ein Durchmesser der Aufnahmeöffnungen 15 ist. Auf diese Weise wird verhindert, dass die mit einer derartigen Querschnittserweiterung versehenen Kontaktbolzen 14 durch die Aufnahmeöffnungen 15 herausfallen und verloren gehen, beispielsweise falls die Federbleche 13, über die die Kontaktbolzen 14 mit dem Grundträger 2 oder mit dem Leuchtenteil 3 verbunden sind.

Die Befestigungskupplung 5 der in den Figuren dargestellten Befestigungsvorrichtung 1 ist als Bajonettkupplung ausgebildet, die durch eine Steck-Drehbewegung des Gegenkupplungselements 7 relativ zu dem Kupplungselement 6 geschlossen wird.

Das Gegenkupplungselement 7 und das Leuchtenteil 3 bilden gemeinsam eine stofflich homogene, monolithische Einheit. Es kann auch gesagt werden, dass die das Leuchtenteil 3 und der das Gegenkupplungselement 7 einstückig miteinander verbunden sind.

Die Befestigungskupplung 5 weist mehrere zwischen dem Kupplungselement 6 und dem Gegenkupplungselement 7 wirksame Sicherungselemente 20 auf. Die Sicherungselemente 20 dienen dazu, ein unbeabsichtigtes Lösen der Befestigungskupplung 5 zu verhindern.

Das Kupplungselement 6 ist als Drehring ausgebildet und weist zumindest zwei, vorzugsweise drei oder mehr Haltevorsprünge 21 auf. Das Gegenkupplungselement 7 ist mit einer entsprechenden Anzahl von zu den Haltevorsprüngen 21 passenden Halteaufnahmen 22 ausgestattet. Die Haltevorsprünge 21 und Halteaufnahmen 22 sind gut in den Figuren 1 bis 4 zu erkennen. Jede der Halteaufnahmen 22 weist eine oberseitige Einführöffnung 23 auf, durch die die Haltevorsprünge 21 des Kupplungselements 6 in die Halteaufnahmen 22 des Gegenkupplungselements 7 eingesteckt und durch eine relative Drehbewegung des Gegenkupplungselements 7 zu dem Kupplungselement 6 in die in den Figuren 2 und 3 dargestellte Position eingerückt werden können.

Innerhalb jeder der Halteaufnahmen 22 ist jeweils ein Sicherungselement 20 angeordnet oder ausgebildet. Gemäß Fig. 3 handelt es sich bei den Sicherungselementen 20 jeweils um einen radial zum Mittelpunkt des Leuchtenteils 3 beziehungsweise des Gegenkupplungselements 7 orientierten Sicherungsvorsprung 24. Eine lichte Höhe des Sicherungsvorsprungs 24 beträgt zumindest ein Viertel (1/4) oder mehr einer lichten Höhe der Haltevorsprünge 21 des Kupplungselements 6.

Ein Abstand D1 der jeweiligen Sicherungselemente 20, 24 innerhalb der Halteaufnahmen 22 zu einem Grund 25 der Halteaufnahmen 22 ist größer als eine lichte Höhe der Haltevorsprünge 21. Dabei kann der Abstand D1 eineinviertel, eineindrittel, eineinhalb Mal oder doppelt oder mehrfach so groß wie die lichte Höhe der Haltevorsprünge 21 des Kupplungselements 6 sein. Auf diese Weise ist der Abstand D1 ausreichend groß, um ein vergleichsweise einfaches, jedoch bewusstes Lösen der Befestigungskupplung 5 durch den Benutzer der Befestigungsvorrichtung 1 zu erlauben.

Eine lichte Höhe der Sicherungselemente 20, 24 ist kleiner als ein zwischen dem in Gebrauchsstellung befindlichen Gegenkupplungselements 7 und einer wand- oder deckenseitigen Oberseite 8 des Kupplungselements 6 gemessener Abstand D2 (vgl. Fig. 2). Somit ist der zur Verfügung stehende axiale Verschiebeweg des Gegenkupplungselements 7 relativ zu dem Kupplungselement 6 ausreichend groß, um die Höhe der Sicherungselemente 20, 24 zum Lösen der Befestigungskupplung 5 zu überwinden.

Das Kupplungselement 6 weist zudem bei geschlossener Befestigungskupplung 5 und in Gebrauchsstellung der Leuchte an der Befestigungsvorrichtung 1 einen Abstand zu einer wand- oder deckenseitigen Grundseite 26 des Grundträgers 2 auf. Auf diese Weise wird sichergestellt, dass eine freie Drehbarkeit des Kupplungselements 6 relativ zu dem Grundträger 2 nicht durch ein Anliegen des Kupplungselements 6 an einer Wand oder Decke behindert wird.

Bei dem in den Figuren dargestellten Ausführungsbeispiel ist zu erkennen, dass das Leuchtenteil 3 ein Befestigungsmittel 27 in Form eines Aufhängehakens für eine Leuchte aufweist. An diesem Befestigungsmittel 27 kann eine Leuchte eingehängt werden.

Eine Verkabelung der Leuchte mit einem Leuchtenanschlussmittel 28, hier einer Lüsterklemme 28, des Leuchtenteils 3 ist auch bei von dem Grundträger 2 gelöstem Leuchtenteil 3 möglich. Daher kann das elektrische Anschließen der Leuchte an das Leuchtenteil 3 auch in komfortabler Haltung abseits der eigentlichen Befestigungsstelle der Leuchte vorgenommen werden. Dies erhöht den Komfort bei der Verwendung der Befestigungsvorrichtung 1 und bei der Montage der Leuchte erheblich. Die Lüsterklemme 28 ist über eine entsprechende Stromführung mit den elektrischen Gegenkontaktelementen 12 an dem Leuchtenteil 3 elektrisch verbunden.

Bei einer anderen, in den Figuren nicht dargestellten Ausführungsform der Befestigungsvorrichtung 1 ist das Leuchtenteil 3 integraler Bestandteil einer Leuchte. Das bedeutet, dass das Leuchtenteil nicht ohne einen gewissen Aufwand, beispielsweise durch Einsatz von Werkzeug, von der Leuchte entfernt werden kann. Dies hat den Vorteil, dass einem Endkunden eine Leuchte bereits mit fest daran montiertem und auch elektrisch angeschlossenem Leuchtenteil 3 angeboten werden kann. Somit ist eine Baureihe von mit standardisierten Leuchtenteilen 3 ausgestatteten Leuchten denkbar, die einen besonders einfachen Wechsel der Leuchten an einer mit einem entsprechenden Grundträger 2 einer solchen Befestigungsvorrichtung 1 bestückten Befestigungsstelle erlaubt.

Über eine Leuchtmittelfassung einer Leuchte kann ein Leuchtmittel zumindest indirekt mit dem Leuchtenteil lösbar verbunden werden. Als Leuchtmittel können unterschiedlichste Lampen, zum Beispiel Halogenstrahler oder LED-Lampen dienen. Bei einem Verschleiß des Leuchtmittels lässt sich dieses von dem Leuchtenteil lösen und durch ein neues ersetzen.

Bei der Verwendung der Befestigungsvorrichtung 1 ist vorgesehen, dass zunächst das Grundteil 2 mit dem Kupplungselement 6 an einer Decke oder Wand montiert wird. Hierbei wird in der Regel auch schon eine Verkabelung der elektrischen Kontaktelemente 11 mit einem vorhandenen elektrischen Anschluss 10 der Wand oder Decke vorgenommen. Dazu weist der Grundträger 2 als Anschlussmittel 29 eine Lüsterklemme 29 auf, die mit den elektrischen Kontaktelementen 11 des Grundträgers 2 elektrisch verbunden ist. Dies ist beispielsweise in Fig. 1 stark schematisiert dargestellt.

Anschließend wird ein mit einer Leuchte verbundenes Leuchtenteil 3 durch Schließen der Kupplungsvorrichtung 5 an dem Grundteil 2 und damit auch an der Wand oder Decke befestigt. Die elektrische Verbindung zwischen dem Grundträger 2 und dem Leuchtenteil 3 und damit auch zwischen dem Anschluss 10 und der elektrisch mit dem Leuchtenteil 3 und seinen Gegenkontaktelementen 12 verbundenen Leuchte wird über die elektrische Kontaktierungsvorrichtung 9 der Befestigungsvorrichtung 1 beim Schließen der Befestigungskupplung 5 vorzugsweise automatisch hergestellt.

Die Erfindung befasst sich mit der Befestigungsvorrichtung 1 und ihrer Verwendung zur Montage oder Befestigung einer Leuchte an einer Wand oder Decke. Um die Montage oder Befestigung der Leuchte zu vereinfachen, weist die Befestigungsvorrichtung 1 den stationär an einer Wand oder Decke zu befestigenden Grundträger 2 und das mit einer Leuchte verbindbare oder verbundene Leuchtenteil 3 auf. Die Befestigungsvorrichtung 1 umfasst ferner die Befestigungskupplung 5, die ein Kupplungselement 6 an dem Grundträger 2 und ein korrespondierend dazu ausgebildetes Gegenkupplungselement 7 an dem Leuchtenteil 3 umfasst. Das Kupplungselement 6 kann relativ zu dem Grundträger 2 der Befestigungsvorrichtung 1 drehbar sein. Dies ermöglicht es, eine mithilfe der Befestigungsvorrichtung 1 an einer Wand oder Decke befestigte Leuchte auch bei geschlossener Befestigungskupplung 5 durch eine relative Drehung des Leuchtenteils 3 zu dem Grundträger 2 in gewünschter Weise auszurichten.

### Bezugszeichenliste

- 1: Befestigungsvorrichtung
- 2: Grundträger
- 3: Leuchtenteil
- 4: Durchstecköffnung in 2
- 5: Befestigungskupplung
- 6: Kupplungselement
- 7: Gegenkupplungselement
- 8: Oberseite von 6
- 9: Kontaktierungsvorrichtung
- 10: Anschluss
- 11: Kontaktelement an 2
- 12: Gegenkontaktelement an 3
- 13: Federblech
- 14: Kontaktbolzen an 2
- 15: Aufnahmeöffnung für 14
- 16: Schleifringblech an 3
- 17: Gegenkontakt an 3
- 18: Ringnut in 2
- 18a: Bolzenaufnahme in 2
- 19: Nutöffnung von 18
- 19a: Öffnung von 18a
- 20: Sicherungselement
- 21: Haltevorsprung an 6
- 22: Halteaufnahme an 7
- 23: Einführöffnung in 22 an 7
- 24: Sicherungsvorsprung
- 25: Grund von 22
- 26: Grundseite von 2
- 27: Befestigungsmittel an 3
- 28: Lüsterklemme an 3
- 29: Lüsterklemme an 2
- D1: Abstand zwischen 20 und 25
- D2: Abstand zwischen 7 und 8

## Patentansprüche

1. Befestigungsvorrichtung (1) zur Befestigung einer Leuchte an einer Decke oder Wand mit einem an einer Decke oder Wand befestigbaren, stationären Grundträger (2) und einem an einer Leuchte befestigbaren oder befestigten Leuchtenteil (3), wobei die Befestigungsvorrichtung (1) eine Befestigungskupplung (5) zur lösbaren Befestigung des Leuchtenteils (3) an dem Grundträger (2) aufweist, wobei die Befestigungskupplung (5) ein an dem Grundträger (2) angeordnetes Kupplungselement (6) und ein mit dem Leuchtenteil (3) verbundenes, zu dem Kupplungselement (6) komplementär ausgebildetes Gegenkupplungselement (7) umfasst, und wobei das Kupplungselement (6) drehbar ist, **dadurch gekennzeichnet, dass** das Kupplungselement (6) bei geschlossener Befestigungskupplung (5) in mit dem Gegenkupplungselement (7) gekoppelter Gebrauchsstellung zusammen mit dem Leuchtenteil (3) relativ zu dem Grundträger (2) drehbar ist.

2. Befestigungsvorrichtung (1) nach Anspruch 1, **dadurch gekennzeichnet, dass** das Gegenkupplungselement (7) drehfest mit dem Leuchtenteil (3) verbunden ist.

3. Befestigungsvorrichtung (1) nach Anspruch 1 oder 2, **dadurch gekennzeichnet, dass** die Befestigungskupplung (5) werkzeugfrei schließbar und lösbar ist und/oder dass das Kupplungselement (6) relativ zu dem Grundträger (2) axial verschieblich ist und/oder dass das Kupplungselement (6), insbesondere an seiner wand- oder deckenseitigen Oberseite (8), eine rutschhemmende Beschichtung aufweist und/oder aus einem rutschhemmenden Material besteht.

4. Befestigungsvorrichtung (1) nach einem der Ansprüche 1 bis 3, **dadurch gekennzeichnet, dass** die Befestigungsvorrichtung (1) eine elektrische Kontaktierungsvorrichtung (9) zur Herstellung einer elektrischen Verbindung zwischen einer mit dem Leuchtenteil (3) verbundenen Leuchte und einem elektrischen Anschluss (10) aufweist, vorzugsweise wobei die elektrische Kontaktierungsvorrichtung (9) an dem Grundträger (2) ein Anschlussmittel (29), insbesondere eine Lüsterklemme (29), und mit diesem elektrisch verbundene elektrische Kontaktelemente (11) und an dem Leuchtenteil (3) dazu passende elektrische Gegenkontaktelemente (12) und ein elektrisch mit diesen verbundenes Leuchtenanschlussmittel (28), insbesondere eine Lüsterklemme (28), umfasst.

5. Befestigungsvorrichtung (1) nach Anspruch 4, **dadurch gekennzeichnet, dass** die elektrische Kontaktierungsvorrichtung (9), insbesondere elektrische Kontaktelemente (11) an dem Grundträger (2) und elektrische Gegenkontaktelemente (12) an dem Leuchtenteil (3), derart angeordnet und/oder ausgebildet ist/sind, dass eine elektrische Verbindung zwischen einem elektrischen Anschluss (10) und dem Leuchtenteil (3) durch Schließen der Befestigungskupplung (5) herstellbar ist.

6. Befestigungsvorrichtung (1) nach einem der vorherigen Ansprüche 4 oder 5, **dadurch gekennzeichnet, dass** die elektrische Kontaktierungsvorrichtung (9) zumindest zwei oder drei oder vier oder mehr, vorzugsweise federnd gelagerte, Kontaktbolzen (14) als Kontaktelemente (11) an dem Grundträger (2) und in Anzahl und Anordnung entsprechende Schleifringe oder Schleifringbleche (16) und/oder zumindest einen zentrischen Gegenkontakt (17), insbesondere eine zentrische Kontaktbuchse und/oder einen zentrischen Gegenpin, als Gegenkontaktelemente (12) an dem Leuchtenteil (3) aufweist, oder dass die elektrische Kontaktierungsvorrichtung (9) zumindest zwei oder drei oder vier oder mehr, vorzugsweise federnd gelagerte, Kontaktbolzen (14) als Gegenkontaktelemente (12) an dem Leuchtenteil (3) und in Anzahl und Anordnung entsprechende Schleifringe oder Schleifringbleche (16) und/oder zumindest einen zentrischen Gegenkontakt (17), insbesondere eine zentrisch angeordnete Kontaktbuchse und/oder einen zentrisch angeordneten Gegenpin, als Kontaktelemente (11) an dem Grundträger (2) aufweist.

7. Befestigungsvorrichtung (1) nach Anspruch 5 oder 6, **dadurch gekennzeichnet, dass** der Grundträger (2) oder das Leuchtenteil (3) Ringnuten (18) zur Aufnahme von Schleifringen oder Schleifringblechen (16) und/oder eine zentrische Bolzenaufnahme (18a) aufweisen, wobei innerhalb der Ringnuten (18) und/oder der zentrischen Bolzenaufnahme (18a) freie Kontaktenden der Kontaktelemente (11), insbesondere der Kontaktbolzen (14), mit einem Abstand zu einer Nutöffnung (19) der Ringnuten (18) und/oder einer Öffnung (19a) der Bolzenaufnahme (18a) angeordnet sind.

8. Befestigungsvorrichtung (1) nach einem der vorherigen Ansprüche, **dadurch gekennzeichnet, dass** die Befestigungskupplung (5) als Bajonettkupplung ausgebildet ist, die durch eine Steck-Drehbewegung des Gegenkupplungselements (7) relativ zu dem Kupplungselement (6) schließbar ist.

9. Befestigungsvorrichtung (1) nach einem der vorherigen Ansprüche, **dadurch gekennzeichnet, dass** die Befestigungskupplung (5) zumindest ein zwischen dem Kupplungselement (6) und dem Gegenkupplungselement (7) wirksames Sicherungselement (20) aufweist, um ein unbeabsichtigtes Lösen der Befestigungskupplung (5) zu verhindern.

10. Befestigungsvorrichtung (1) nach einem der vorherigen Ansprüche, **dadurch gekennzeichnet, dass** das Kupplungselement (6) ein Drehring mit zumindest zwei Haltevorsprüngen (21) ist und dass das Gegenkupplungselement (7) zumindest zwei zu den Haltevorsprüngen (21) passende Halteaufnahmen (22) aufweist, oder dass das Kupplungselement (6) ein Drehring mit zumindest zwei Halteaufnahmen (22) ist und dass das Gegenkupplungselement (7) zumindest zwei zu den Halteaufnahmen (22) passende Haltevorsprünge (21) aufweist.

11. Befestigungsvorrichtung (1) nach Anspruch 10, **dadurch gekennzeichnet, dass** innerhalb der Halteaufnahmen (22) als Sicherungselemente (20) jeweils ein, insbesondere radial orientierter, Sicherungsvorsprung (24) angeordnet ist, dessen lichte Höhe zumindest einem Viertel einer lichten Höhe der Haltevorsprünge (21) entspricht.

12. Befestigungsvorrichtung (1) nach Anspruch 11, **dadurch gekennzeichnet, dass** ein Abstand (D1) der Sicherungselemente (20,24) zu einem Grund (25) ihrer Halteaufnahmen (22) größer als eine lichte Höhe der Haltevorsprünge (21) ist, vorzugsweise wobei der Abstand eineinviertel, eineindrittel, eineinhalb mal oder doppelt oder mehrfach so groß wie die lichte Höhe der Haltevorsprünge (21) ist.

13. Befestigungsvorrichtung (1) nach Anspruch 11 oder 12, **dadurch gekennzeichnet, dass** eine lichte Höhe der Sicherungselemente (20, 24) kleiner als ein zwischen dem in Gebrauchsstellung befindlichen Gegenkupplungselement (7) und einer wand- oder deckenseitigen Oberseite (8) des Kupplungselements (6) gemessener Abstand (D2) ist und/oder dass das Kupplungselement (6) bei geschlossener Befestigungskupplung (5) zu einer wand- oder deckenseitigen Grundseite (26) des Grundträgers (2) beabstandet ist.

14. Befestigungsvorrichtung (1) nach einem der vorherigen Ansprüche, **dadurch gekennzeichnet, dass** das Leuchtenteil (3) ein Befestigungsmittel (27), insbesondere einen Aufhängehaken oder Öse, für eine Leuchte aufweist oder dass das Leuchtenteil (3) Teil einer Leuchte ist.

15. Befestigungsvorrichtung (1) nach einem der vorherigen Ansprüche, **dadurch gekennzeichnet, dass** ein Leuchtmittel, bevorzugt über eine Leuchtmittelfassung einer Leuchte, zumindest indirekt mit dem Leuchtenteil (3) lösbar verbunden ist.

16. Verwendung einer Befestigungsvorrichtung (1) nach einem der vorherigen Ansprüche, wobei zunächst das Grundteil (2) mit dem Kupplungselement (6) an einer Decke oder Wand montiert wird, wonach ein mit einer Leuchte verbundenes Leuchtenteil (3) durch Schließen der Befestigungskupplung (5) an dem Grundteil (2) befestigt wird.

17. Verwendung nach Anspruch 16, **dadurch gekennzeichnet, dass** eine elektrische Verbindung zwischen dem Grundträger (2) und dem Leuchtenteil (3) und einer damit verbundenen Leuchte über die elektrische Kontaktierungsvorrichtung (9) der Befestigungsvorrichtung (1) beim Schließen der Befestigungskupplung (5) hergestellt wird.

## Claims

1. Fastening device (1) for fastening a light to a ceiling or wall with a stationary base carrier (2) which can be fastened to a ceiling or wall, and a light component (3) which can be fastened or is fastened to a light, wherein the fastening device (1) has a fastening coupling (5) for releasably fastening the light component (3) to the base carrier (2), wherein the fastening coupling (5) comprises a coupling element (6) which is arranged on the base carrier (2) and a mating coupling element (7) which is connected to the light component (3) and is embodied in a complementary fashion to the coupling element (6), and wherein the coupling element (6) is rotatable, **characterized in that** when the fastening coupling (5) is closed the coupling element (6) can be rotated, together with the light component (3), in a position of use relative to the base carrier (2), which position of use is coupled to the mating coupling element (7).

2. Fastening device (1) according to Claim 1, **characterized in that** the mating coupling element (7) is connected in a rotationally fixed fashion to the light component (3).

3. Fastening device (1) according to Claim 1 or 2, **characterized in that** the fastening coupling (5) can be closed and released without a tool, and/or **in that** the coupling element (6) can be slid axially relative to the base carrier (2), and/or **in that** the coupling element (6) has an anti-slip coating and/or is composed of an anti-slip material, in particular on its wall-side or ceiling-side upper side (8).

4. Fastening device (1) according to one of Claims 1 to 3, **characterized in that** the fastening device (1) has an electrical contact-forming device (9) for establishing an electrical connection between a light which is connected to the light component (3) and an electrical terminal (10), preferably wherein the electrical contact-forming device (9) comprises, on the base carrier (2), a connecting means (29), in particular a luster terminal (29), and electrical contact elements (11) which are electrically connected thereto, and on the light component (3) it has mating contact elements (12), matching the latter, and a light connection means (28), in particular a luster terminal (28), which is electrically connected to said mating contact elements (12).

5. Fastening device (1) according to Claim 4, **characterized in that** the electrical contact-forming device (9), in particular electrical contact elements (11) is/are arranged and/or formed on the base carrier (2), and electrical mating contact elements (12) are arranged and/or formed on the light component (3), in such a way that an electrical connection can be established between an electrical terminal (10) and the light component (3) by closing the fastening coupling (5).

6. Fastening device (1) according to one of the preceding Claims 4 or 5, **characterized in that** the electrical contact-forming device (9) has at least two or three or four or more, preferably sprung-mounted contact pins (14) as contact elements (11) on the base carrier (2), and slip rings or slip ring plates (16) which correspond in number and arrangement and/or at least one central mating contact (17), in particular a central contact bushing and/or a central mating pin, as mating contact elements (12) on the light component (3), or **in that** the electrical contact-forming device (9) has at least two or three or four or more, preferably sprung-mounted, contact pins (14) as mating contact elements (12) on the light component (3), and slip rings or slip ring plates (16) which correspond in number and arrangement and/or at least one central mating contact (17), in particular a centrally arranged contact bushing and/or a centrally arranged mating pin, as contact elements (11) on the base carrier (2).

7. Fastening device (1) according to Claim 5 or 6, **characterized in that** the base carrier (2) or the light component (3) have annular grooves (18) for receiving slip rings or slip ring plates (16) and/or a central pin receptacle (18a), wherein free contact ends of the contact elements (11), in particular of the contact pins (14), are arranged within the annular grooves (18) and/or the central pin receptacle (18a), at a distance from a groove opening (19) of the annular grooves (18) and/or an opening (19a) of the pin receptacle (18a).

8. Fastening device (1) according to one of the preceding claims, **characterized in that** the fastening coupling (5) is embodied as a bayonet coupling which can be closed by means of plug and turn movement of the mating coupling element (7) relative to the coupling element (6).

9. Fastening device (1) according to one of the preceding claims, **characterized in that** the fastening coupling (5) has at least one securing element (20) which is effective between the coupling element (6) and the mating coupling element (7), in order to prevent unintentional release of the fastening coupling (5).

10. Fastening device (1) according to one of the preceding claims, **characterized in that** the coupling element (6) is a rotating ring with at least two securing projections (21), and **in that** the mating coupling element (7) has at least two securing receptacles (22) which match the securing projections (21), or **in that** the coupling element (6) is a rotating ring with at least two securing receptacles (22), and **in that** the mating coupling element (7) has at least two securing projections (21) which match the securing receptacles (22).

11. Fastening device (1) according to Claim 10, **characterized in that** in each case one, in particular radially oriented, securing projection (24) whose clear height corresponds at least to a quarter of a clear height of the securing projections (21) is arranged within the securing receptacles (22), as securing elements (20).

12. Fastening device (1) according to Claim 11, **characterized in that** a distance (D1) of the securing elements (20, 24) from a base (25) of their securing receptacles (22) is greater than a clear height of the securing projections (21), preferably wherein the distance is one and a quarter, one a third or one and a half times or twice or more times as large as the clear height of the securing projections (21).

13. Fastening device (1) according to Claim 11 or 12, **characterized in that** a clear height of the securing elements (20, 24) is smaller than a distance (D2) measured between the mating coupling element (7) in the position of use and a wall-side or ceiling-side upper side (8) of the coupling element (6), and/or in that when the fastening coupling (5) is closed the coupling element (6) is spaced apart from a wall-side or ceiling-side base side (26) of the base carrier (2).

14. Fastening device (1) according to one of the preceding claims, **characterized in that** the light component (3) has a fastening means (27), in particular a suspension hook or eyelet, for a light, or **in that** the light component (3) is part of a light.

15. Fastening device (1) according to one of the preceding claims, characterize in that a lighting means is releasably connected at least indirectly to the lighting component (3), preferably via a lighting means socket of a light.

16. Use of a fastening device (1) according to one of the preceding claims, wherein the base part (2) is firstly mounted with the coupling element (6) on a ceiling or wall, after which a light component (3) which is connected to a light is fastened to the base part (2) by closing the fastening coupling (5).

17. Use according to Claim 16, **characterized in that** an electrical connection is established between the base carrier (2) and the light component (3) and a light connected thereto, via the electrical contact-forming device (9) of the fastening device (1) when the fastening coupling (5) is closed.

## Revendications

1. Dispositif de fixation (1) pour la fixation d'un luminaire à un plafond ou à un mur, comprenant un support de base stationnaire (2) pouvant être fixé à un plafond ou à un mur et une partie de luminaire (3) fixée ou pouvant être fixée à un luminaire, dans lequel le dispositif de fixation (1) présente un raccord de fixation (5) pour la fixation séparable de la partie de luminaire (3) au support de base (2), dans lequel le raccord de fixation (5) comprend un élément de raccord (6) disposé sur le support de base (2) et un élément de raccord opposé (7) de forme complémentaire à l'élément de raccord (6) et assemblé à la partie de luminaire (3), et dans lequel l'élément de raccord (6) est rotatif, **caractérisé en ce que** l'élément de raccord (6) peut, lorsque le raccord de fixation (5) est fermé dans la position d'utilisation couplée à l'élément de raccord (7), tourner par rapport au support de base (2) en même temps que la partie de luminaire (3).

2. Dispositif de fixation (1) selon la revendication 1, **caractérisé en ce que** l'élément de raccord opposé (7) est relié de façon calée en rotation à la partie de luminaire (3).

3. Dispositif de fixation (1) selon la revendication 1 ou 2, **caractérisé en ce que** le raccord de fixation (5) peut être fermé et libéré sans outil et/ou **en ce que** l'élément de raccord (6) peut glisser axialement par rapport au support de base (2) et/ou **en ce que** l'élément de raccord (6) présente, en particulier sur son côté supérieur (8) tourné vers le mur ou le plafond, un revêtement anti-glissement et/ou est composé d'un matériau anti-glissement.

4. Dispositif de fixation (1) selon l'une quelconque des revendications 1 à 3, **caractérisé en ce que** le dispositif de fixation (1) présente un système de contact électrique (9) pour la réalisation d'une connexion électrique entre un luminaire assemblé à la partie de luminaire (3) et un raccord électrique (10), de préférence dans lequel le système de contact électrique (9) comprend sur le support de base (2) un moyen de raccordement (29), en particulier un bornier de lustre (29), et des éléments de contact électrique (11) électriquement connectés à celui-ci, et sur la partie de luminaire (3) des éléments de contact électrique opposés (12) adaptés à ceux-ci et un moyen de raccordement de luminaire (28), en particulier un bornier de lustre (28) connecté à ceux-ci.

5. Dispositif de fixation (1) selon la revendication 4, **caractérisé en ce que** le système de contact électrique (9), en particulier les éléments de contact électrique (11) sur le support de base (2), et les éléments de contact électrique opposés (12) sur la partie de luminaire (3), est (sont) disposé(s) et/ou configuré(s) de telle manière qu'une connexion électrique puisse être établie entre un raccord électrique (10) et la partie de luminaire (3) en fermant le raccord de fixation (5).

6. Dispositif de fixation (1) selon l'une quelconque des revendications précédentes 4 ou 5, **caractérisé en ce que** le système de contact électrique (9) présente au moins deux ou trois ou quatre, ou davantage, bornes de contact (14), de préférence à ressort, comme éléments de contact (11) sur le support de base (2) et des bagues glissantes ou des tôles de bagues glissantes (16) en un nombre et un agencement correspondants et/ou au moins un contact opposé central (17), en particulier une douille de contact centrale et/ou une contre-broche centrale, comme éléments de contact opposés (12) sur la partie de luminaire (3), ou **en ce que** le système de contact électrique (9) présente au moins deux ou trois ou quatre, ou davantage, bornes de contact (14) de préférence à ressort comme éléments de contact opposés (12) sur la partie de luminaire (3), et des bagues glissantes ou des tôles de bagues glissantes (16) et/ou au moins un contact opposé central (17), en particulier une douille de contact disposée au centre et/ou une contre-broche disposée au centre, comme éléments de contact opposés (11) sur le support de base (2).

7. Dispositif de fixation (1) selon la revendication 5 ou 6, **caractérisé en ce que** le support de base (2) ou la partie de luminaire (3) présente des rainures annulaires (18) destinées à contenir des bagues glissantes ou des tôles de bagues glissantes (16) et/ou un logement de borne central (18a), dans lequel des extrémités de contact libres des éléments de contact (11), en particulier des bornes de contact (14), sont disposées à l'intérieur des rainures annulaires (18) et/ou du logement de borne central (18a) avec une distance d'une ouverture de rainure (19) des rainures annulaires (18) ou d'une ouverture (19a) du logement de borne (18a).

8. Dispositif de fixation (1) selon l'une quelconque des revendications précédentes, **caractérisé en ce que** le raccord de fixation (5) est formé par un verrou à baïonnette, qui peut être fermé par un mouvement de rotation de l'élément de raccord opposé (7) par rapport à l'élément de raccord (6).

9. Dispositif de fixation (1) selon l'une quelconque des revendications précédentes, **caractérisé en ce que** le raccord de fixation (5) présente au moins un élément de blocage (20) agissant entre l'élément de raccord (6) et l'élément de raccord opposé (7), afin d'empêcher une libération inopinée du raccord de fixation (5).

10. Dispositif de fixation (1) selon l'une quelconque des revendications précédentes, **caractérisé en ce que** l'élément de raccord (6) est une bague tournante qui présente au moins deux ergots de retenue (21), et **en ce que** l'élément de raccord opposé (7) présente au moins deux logements de retenue (22) adaptés aux ergots de retenue (21), ou **en ce que** l'élément de raccord (6) est une bague tournante qui présente au moins deux logements de retenue (22), et **en ce que** l'élément de raccord opposé (7) présente au moins deux ergots de retenue (21) adaptés aux logements de retenue (22).

11. Dispositif de fixation (1) selon la revendication 10, **caractérisé en ce qu'**à l'intérieur des logements de retenue (22) est chaque fois disposé comme élément de blocage (20) un ergot de blocage (24) orienté en particulier radialement, dont la hauteur libre correspond au moins à un quart d'une hauteur libre des ergots de retenue (21).

12. Dispositif de fixation (1) selon la revendication 11, **caractérisé en ce qu'**une distance (D1) entre les éléments de blocage (20, 24) et un fond (25) de leurs logements de retenue (22) est plus grande qu'une hauteur libre des ergots de retenue (21), de préférence dans lequel la distance est aussi grande qu'une fois et un quart, une fois et un tiers, une fois et demi, ou deux fois, ou plusieurs fois la hauteur libre des ergots de retenue (21).

13. Dispositif de fixation (1) selon la revendication 11 ou 12, **caractérisé en ce qu'**une hauteur libre des éléments de blocage (20, 24) est inférieure à une distance (D2) mesurée entre l'élément de raccord opposé (7) se trouvant en position d'utilisation et un côté supérieur (8) de l'élément de raccord (6) tourné vers le mur ou le plafond, et/ou **en ce que** l'élément de raccord (6), lorsque le raccord de fixation (5) est fermé, est espacé d'un côté inférieur (26) du support de base (2) tourné vers le mur ou le plafond.

14. Dispositif de fixation (1) selon l'une quelconque des revendications précédentes, **caractérisé en ce que** la partie de luminaire (3) présente un moyen de fixation (27), en particulier un crochet de suspension ou des oreilles, pour un luminaire, ou **en ce que** la partie de luminaire (3) est une partie d'un luminaire.

15. Dispositif de fixation (1) selon l'une quelconque des revendications précédentes, **caractérisé en ce qu'**un moyen d'éclairage, de préférence un support d'une lampe, est assemblé de façon séparable, au moins indirectement à la partie de luminaire (3).

16. Utilisation d'un dispositif de fixation (1) selon l'une quelconque des revendications précédentes, dans laquelle on monte d'abord la partie de base (2) avec l'élément de raccord (6) sur un plafond ou un mur, puis on fixe une partie de luminaire (3) pourvue d'une lampe de façon séparable sur la partie de base (2) en fermant le raccord de fixation (5).

17. Utilisation selon la revendication 16, **caractérisée en ce que** l'on réalise une connexion électrique entre le support de base (2) et la partie de luminaire (3) et une lampe montée sur-celle-ci par un système de contact électrique (9) du dispositif de fixation (1) en fermant le raccord de fixation (5).
